# EUROPÄISCHE PATENTSCHRIFT

(11) **EP 2 724 061 B1**
(45) Veröffentlichungstag und Bekanntmachung des Hinweises auf die Patenterteilung: **31.12.2014**
(21) Anmeldenummer: 11790887.1
(22) Anmeldetag: 02.12.2011
(51) Int. Cl.: F16K 31/00, F15B 13/08

(54) **VENTILANORDNUNG**
VALVE ARRANGEMENT
SYSTÈME DE SOUPAPE

(43) Veröffentlichungstag der Anmeldung: 30.04.2014
(73) Patentinhaber: Festo AG & Co. KG, 73734 Esslingen (DE)
(72) Erfinder: PALERMO, Gino, 73072 Donzdorf (DE); ANDERLE, Jens, 73054 Eislingen (DE)
(74) Vertreter: Abel, Martin
(86) Internationale Anmeldenummer: PCT/EP2011/006040
(87) Internationale Veröffentlichungsnummer: WO 2013/079083

(56) Entgegenhaltungen:
- EP-B1- 1 564 464

## Beschreibung

Die Erfindung betrifft eine Ventilanordnung, mit einem Ventil, das über eine eine Ventilkammer umschließende Gehäusewandung verfügt, die eine Ventilsitzwand mit an ihrer der Ventilkammer zugewandten Innenseite angeordneten Ventilsitzen mindestens eines Speisekanals und mindestens eines Entlastungskanals aufweist, wobei in der Ventilkammer eine Fluidsteuereinrichtung angeordnet ist, die durch Zusammenwirken mit den Ventilsitzen in der Lage ist, den mindestens einen Speisekanal und den mindestens einen Entlastungskanal wahlweise abzusperren oder freizugeben, und wobei sich in der Gehäusewandung ein in die Ventilkammer einmündender und ständig mit der Ventilkammer in Fluidverbindung stehender Arbeitskanal erstreckt.

Eine aus der EP 1 564 464 B1 bekannte Ventilanordnung dieser Art enthält ein Ventil mit einem Ventilgehäuse, dessen Gehäusewandung eine Ventilkammer umschließt, in der eine piezoelektrische Fluidsteuereinrichtung angeordnet ist. Die Fluidsteuereinrichtung enthält einen piezoelektrischen Biegewandler, der in der Lage ist, den Fluiddurchgang durch einen in die Ventilkammer einmündenden Speisekanal und einen ebenfalls in die Ventilkammer einmündenden Entlastungskanal zu steuern. Beide Kanäle verfügen über einen mit dem Biegewandler kooperierenden Ventilsitz, der an der Innenseite einer Wand der Gehäusewandung angeordnet ist, die aufgrund ihrer Funktion als Ventilsitzwand bezeichnet werden kann. Ein weiterer Fluidkanal, der als mit einem Verbraucher verbindbarer Arbeitskanal ausgebildet ist, steht in ständiger Fluidverbindung mit der Ventilkammer und mündet wie der Speisekanal und der Entlastungskanal zu der der Ventilkammer entgegengesetzten Außenseite der Ventilsitzwand aus. Entsprechend dem durch elektrische Ansteuerung vorgebbaren Betriebszustand der Fluidsteuereinrichtung ist der Arbeitskanal durch die Ventilkammer hindurch mit entweder dem Speisekanal oder dem Entlastungskanal verbindbar oder kann von beiden Kanälen abgetrennt werden. Vor allem wenn das bekannte Ventil mit hohen Fluiddrücken betrieben wird, unterliegt die Gehäusewandung einer hohen Beanspruchung, die zu Verformungen der Gehäusewandung führen kann. Wenn davon die Ventilsitzwand betroffen ist, verändert sich die Relativlage zwischen den Ventilsitzen und dem Biegewandler, so dass das angestrebte Betriebsverhalten nicht mehr gewährleistet ist. Vor allem bei Fluidsteuereinrichtungen, die mit kurzen Hüben arbeiten, wie dies bei Piezo-Biegewandlern der Fall ist, wirken sich schon geringfügige Verformungen gravierend auf die Funktionspräzision aus.

Aus der DE 69319467 T2 ist ein elektropneumatischer Umformer bekannt, der ein Gehäuse mit zwei darin ausgebildeten Ventilkammern aufweist. Die eine Ventilkammer fungiert als Zuluftkammer und kommuniziert ständig mit einem Speisekanal. Die andere Ventilkammer fungiert als Entlastungskammer und kommuniziert ständig mit der Atmosphäre. In jeder Ventilkammer befindet sich ein Biegewandler, der durch Kooperation mit einem Ventilsitz die Fluidverbindung zwischen der betreffenden Ventilkammer und einer Verteilerkammer steuern kann, wobei die Verteilerkammer mit einem zu einem Verbraucher führenden Arbeitskanal verbunden ist. Die Verteilerkammer erstreckt sich parallel zu den beiden Ventilkammern und bildet ein Dämpfungs-Volumen, das dazu dient, die Druckschwankungen einer anfänglichen Druckbeaufschlagung zu absorbieren.

Die DE 2 121 015 A offenbart ein Ventil, das über einen Einsatz verfügt, durch den hindurch sich ein Ventilkolben erstreckt. Der Einsatz ist von elastischen Dichtungsbauteilen flankiert, durch die er elastisch federnd gehalten ist. Auf diese Weise werden Beanspruchungen von dem Einsatz ferngehalten.

Der Erfindung liegt die Aufgabe zugrunde, Maßnahmen vorzuschlagen, durch die bei einem Ventil auf der Druckbeaufschlagung basierende Funktionsbeeinträchtigungen minimiert werden.

Zur Lösung dieser Aufgabe ist in Verbindung mit einer Ventilanordnung der eingangs genannten Art vorgesehen, dass die Ventilsitzwand mit ihrer Außenseite eine durch den Arbeitskanal hindurch ständig mit der Ventilkammer in Fluidverbindung stehende Kompensationskammer begrenzt, so dass die Ventilsitzwand unabhängig vom Betriebszustand der Fluidsteuereinrichtung an ihrer Außenseite dem gleichen Fluiddruck ausgesetzt ist wie an ihrer Innenseite.

Durch diese Maßnahme wird an der Ventilsitzwand ein ständiger Druckausgleich geschaffen. Unabhängig vom Betriebszustand der Fluidsteuereinrichtung herrschen in den die Ventilsitzkammer flankierenden Kammern - einerseits die Ventilkammer und andererseits die Kompensationskammer - untereinander gleichhohe Drücke, so dass ein Durchbiegen der Ventilsitzwand zumindest weitestgehend ausgeschlossen werden kann. Dementsprechend bleibt unabhängig von der absoluten Höhe des Fluiddruckes die grundsätzliche lagemäßige Beziehung zwischen der Fluidsteuereinrichtung und den Ventilsitzen konstant, was eine hohe Funktionspräzision auch in solchen Fällen gewährleistet, in denen der Hub eines mit den Ventilsitzen kooperierenden Ventilgliedes der Fluidsteuereinrichtung nur sehr gering ist.

Vorteilhafte Weiterbildungen der Erfindung gehen aus den Unteransprüchen hervor.

Der Arbeitskanal ist zweckmäßigerweise so gestaltet, dass er die Ventilsitzwand unmittelbar durchsetzt und an der der Innenseite entgegengesetzten Außenseite der Ventilsitzwand in die Kompensationskammer ausmündet.

Die Kompensationskammer ist vorzugsweise so gestaltet, dass ihr Umriss im Bereich der Außenseite der Ventilsitzwand zumindest im Wesentlichen dem Umriss der Ventilkammer im Bereich der Innenseite der Ventilsitzwand entspricht. Auf diese Weise können die vom Fluid beaufschlagbaren Flächen an der Innenseite und an der Außenseite der Ventilsitzwand zumindest im Wesentlichen gleichgroß gehalten werden, was einen optimalen Druckkraftausgleich garantiert.

Zweckmäßigerweise mündet jeder Speisekanal und/oder jeder Entlastungskanal an der der Ventilkammer abgewandten Außenseite der Ventilsitzwand derart aus, dass seine der Außenseite zugeordnete Kanalmündung von der im Bereich der Außenseite angeordneten Kompensationskammer fluiddicht abgetrennt ist oder zumindest - insbesondere durch Applikation einer Dichtung - sehr einfach abgetrennt werden kann. Jedenfalls ist gewährleistet, dass zu keiner Zeit des Betriebs der Ventilanordnung eine direkte Fluidverbindung zwischen der Kompensationskammer und einem Speisekanal oder einem Entlastungskanal besteht.

Die Ventilanordnung enthält zweckmäßigerweise eine als Kammerdichtung bezeichnete Dichtung, von der die Kompensationskammer umfangsseitig begrenzt ist und die für eine Abdichtung der Kompensationskammer zur Umgebung sorgt.

Zur fluiddichten Abtrennung des Speisekanals und/oder Entlastungskanals von der Kompensationskammer ist zweckmäßigerweise jeder an der Außenseite angeordneten Kanalmündung des Speisekanals und/oder Entlastungskanals eine als Mündungsdichtung bezeichnete Dichtung zugeordnet, die die betreffende Kanalmündung umrahmt. Es ist besonders vorteilhaft, wenn die Mündungsdichtung als bevorzugt einstückiger Bestandteil der Kammerdichtung ausgebildet ist. Die Kammerdichtung hat zweckmäßigerweise einen die Kompensationskammer umfangsseitig umrahmenden Rahmenabschnitt, der beispielsweise rechteckig geformt ist, und außerdem mindestens einen diesen Rahmenabschnitt durchquerenden Stegabschnitt, der mindestens eine Mündungsdichtung bildet. Bevorzugt enthält die Kammerdichtung zwei Stegabschnitte, deren einer die dem mindestens einen Speisekanal zugeordnete Mündungsdichtung bildet und deren anderer die dem mindestens einen Entlastungskanal zugeordnete Mündungsdichtung bildet. Da die Kompensationskammer durch jeden Stegabschnitt der Kammerdichtung in zwei Kammerabschnitte unterteilt ist, ist pro Stegabschnitt mindestens ein den Stegabschnitt überbrückender Bypasskanal vorhanden, durch den die den Stegabschnitt flankierenden Kammerabschnitte in ständiger Fluidverbindung miteinander stehen, so dass jeder Kammerabschnitt mit einem gleichhohen Druck beaufschlagbar ist wie die Ventilkammer.

Besonders einfach und effektiv kann mindestens ein Bypasskanal dadurch realisiert werden, dass in der Außenseite der Ventilsitzwand in dem von einem Stegabschnitt der Kammerdichtung überdeckten Bereich eine Überströmnut ausgebildet ist, die den betreffenden Stegabschnitt unterquert und die mit beiden den Stegabschnitt flankierenden Kammerabschnitten kommuniziert. Jeder Stegabschnitt bildet somit quasi eine Dichtung, die über eine lokale Undichtigkeit verfügt.

Die Ventilanordnung verfügt zweckmäßigerweise über eine die Kompensationskammer an der der Außenseite der Ventilsitzwand gegenüberliegenden Seite begrenzende Begrenzungswand. Eine derart ausgebildete Kompensationskammer ist zweckmäßigerweise auf der einen Seite von der Ventilsitzwand und auf der gegenüberliegenden Seite von der Begrenzungswand begrenzt und darüber hinaus umfangsseitig von einem sie umrahmenden Rahmenabschnitt einer bevorzugt gummielastische Eigenschaften aufweisenden Kammerdichtung.

Die Begrenzungswand liegt zur Bildung der Kompensationskammer unter Abdichtung an der Kammerdichtung an, wobei diese Kammerdichtung zweckmäßigerweise auch die oben erwähnten Mündungsdichtungen enthält. Prinzipiell könnten die Mündungsdichtungen allerdings auch als bezüglich der Kammerdichtung separate Bauteile realisiert werden.

In einer bevorzugten Ausgestaltung der Ventilanordnung ist die die Kompensationskammer begrenzende Begrenzungswand von einem bezüglich des Ventils separaten Ventilträger gebildet, an dem das Ventil in bevorzugt lösbarer Weise befestigt ist oder befestigt werden kann. In diesem Fall ist die Kompensationskammer dann geschlossen, wenn das Ventil an dem Ventilträger montiert ist, wobei zwischen dem Ventil und dem Ventilträger zweckmäßigerweise die schon erwähnte Kammerdichtung platziert ist. An ein und demselben Ventilträger können ohne weiteres gleichzeitig mehrere Ventile montiert sein.

Bei einer alternativen Bauform ist die Begrenzungswand als unmittelbarer Bestandteil der Gehäusewandung des Ventils ausgebildet, so dass ein doppelwandiger Aufbau vorliegt, bei dem ein Wandabschnitt der Gehäusewandung von der Ventilsitzwand und der beabstandet zu der Ventilsitzwand angeordneten Begrenzungswand gebildet ist. In einem solchen Fall kann man eine separate Kammerdichtung einsparen, wenn die beiden Wände auf sonstige Weise und insbesondere einstückig miteinander verbunden sind. Zur Vermeidung eines fluidischen Kurzschlusses zwischen einerseits der Kompensationskammer und andererseits dem Speisekanal und dem Entlastungskanal kann in der Kompensationskammer eine bezüglich der jeweiligen Kanalmündung konzentrische Mündungsdichtung angeordnet sein oder vorzugsweise eine im Querschnitt ringförmige Kanalwand, die die Kompensationskammer durchsetzt und einerseits an der Ventilsitzwand und andererseits an der Begrenzungswand einstückig angeformt ist.

In der Begrenzungswand erstreckt sich zweckmäßigerweise ein Ausgangskanal, der einerseits zu der Kompensationskammer ausmündet und dadurch ständig mit dem Arbeitskanal in Fluidverbindung steht. Der Ausgangskanal führt zweckmäßigerweise zu einer außen an der Begrenzungswand angeordneten Anschlussöffnung, wo eine Anschlusseinrichtung angeordnet sein kann, die ein bevorzugt lösbares Anschließen einer zu einem Verbraucher führenden Fluidleitung gestattet.

In der Begrenzungswand erstrecken sich zweckmäßigerweise auch mindestens ein mit dem mindestens einen Speisekanal kommunizierender Einlasskanal und/oder mindestens ein mit dem mindestens einen Entlastungskanal kommunizierender Auslasskanal. Auch diese Kanäle führen andererseits zweckmäßigerweise zu einer Außenfläche der Begrenzungswand, wo ihnen bei Bedarf je eine Anschlusseinrichtung zugeordnet sein kann, um im Falle des Speisekanals eine zu einer Druckquelle führende Fluidleitung anschließen zu können und im Falle des Entlastungskanals bei Bedarf einen Schalldämpfer.

Ein vorteilhafter Aufbau der Ventilanordnung sieht eine schwimmende Lagerung der Ventilsitzwand bezüglich eines sie tragenden Ventilträgers vor. Auf diese Weise wird ein unerwünschtes Verbiegen der Gehäusewandung des Ventils beim Befestigen an dem Ventilträger verhindert. Ein solches Verbiegen könnte die Betriebspunkte des Ventils ebenso verändern wie eine unausgeglichene Fluiddruckbeaufschlagung der Ventilsitzwand. Die schwimmende Lagerung wird insbesondere dadurch realisiert, dass einerseits zwischen der Ventilsitzwand und dem Ventilträger eine die dort angeordnete Kompensationskammer umrahmende, elastisch nachgiebige Kammerdichtung platziert wird und andererseits auf der dem Ventilträger entgegengesetzten Seite zwischen der Ventilsitzwand und einem zum Verspannen mit dem Ventilträger dienenden Niederhalter ein gummielastisches Ausgleichselement angeordnet ist. Die Komponenten sind so aufeinander abgestimmt, dass im fest mit dem Ventilträger verspannten Zustand des Niederhalters weder zwischen dem Niederhalter und der Ventilsitzwand noch zwischen dem Ventilträger und der Ventilsitzwand ein direkter Kontakt besteht, sondern dort jeweils ein elastisch nachgiebiges Element zwischengefügt ist.

Ein besonders zweckmäßiger Aufbau des Ventils sieht vor, dass der Niederhalter unmittelbar selbst einen Ventildeckel des Ventils bildet, der gemeinsam mit der Ventilsitzwand die Ventilkammer begrenzt.

Nachfolgend wird die Erfindung anhand der beiliegenden Zeichnung näher erläutert. In dieser zeigen:
Figur 1 eine bevorzugte Ausführungsform der erfindungsgemäßen Ventilanordnung in einer perspektivischen Darstellung,

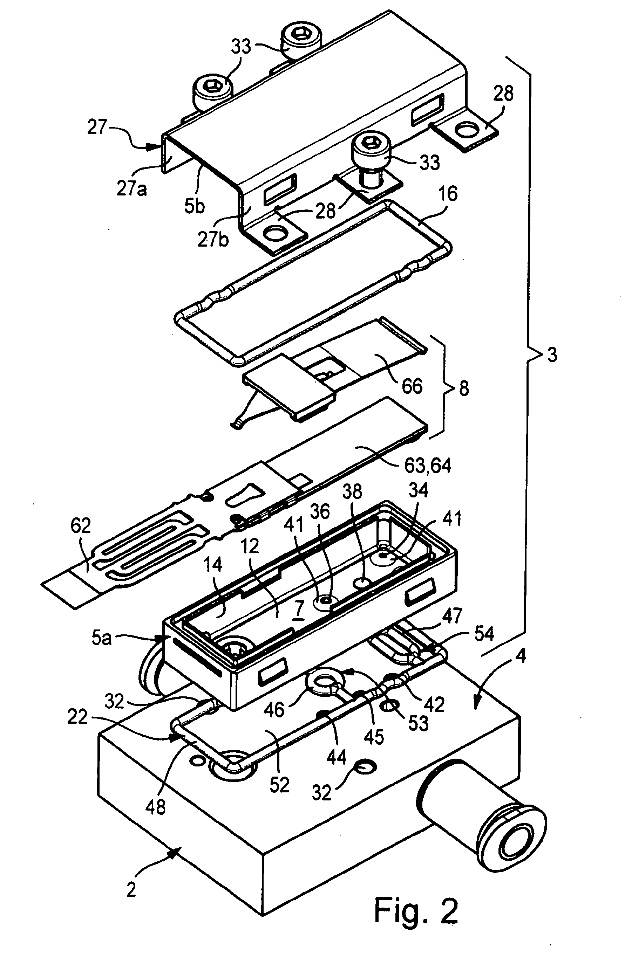

Figur 2 die Ventilanordnung aus Figur 1 in einer Explosionsdarstellung,
Figur 3 einen Längsschnitt durch die Ventilanordnung aus Figur 1 gemäß Schnittlinie III-III,
Figur 4 eine Draufsicht auf das Ventil der beispielhaften Ventilanordnung mit Blickrichtung gemäß Pfeil IV-IV im abgenommenen Zustand des Gehäusedeckels und bei entfernter Fluidsteuereinrichtung, so dass unmittelbar die Einmündungsbereiche der diversen Kanäle in die Ventilkammer sichtbar sind,
Figur 5 eine Unteransicht des Ventils der beispielsgemäßen Ventilanordnung mit Blickrichtung gemäß Schnittlinie V-V aus Figur 3, wobei eine an der Außenseite der Ventilsitzwand anliegende Kammerdichtung sichtbar ist, und
Figur 6 eine mit Figur 5 vergleichbare Unteransicht des Ventils ohne Darstellung des Niederhalters und im entfernten Zustand der Kammerdichtung, so dass als Bypasskanäle genutzte Überströmnuten sichtbar sind, wobei ein strichpunktiert umrahmter Ausschnitt im Bereich einer solchen Überströmnut nochmals gesondert vergrößert abgebildet ist.

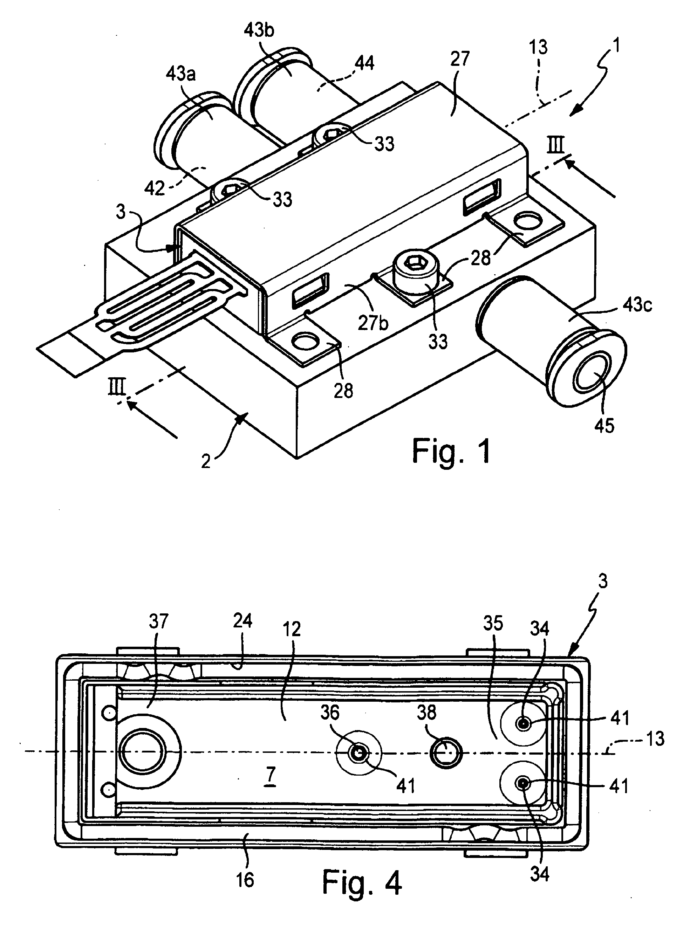

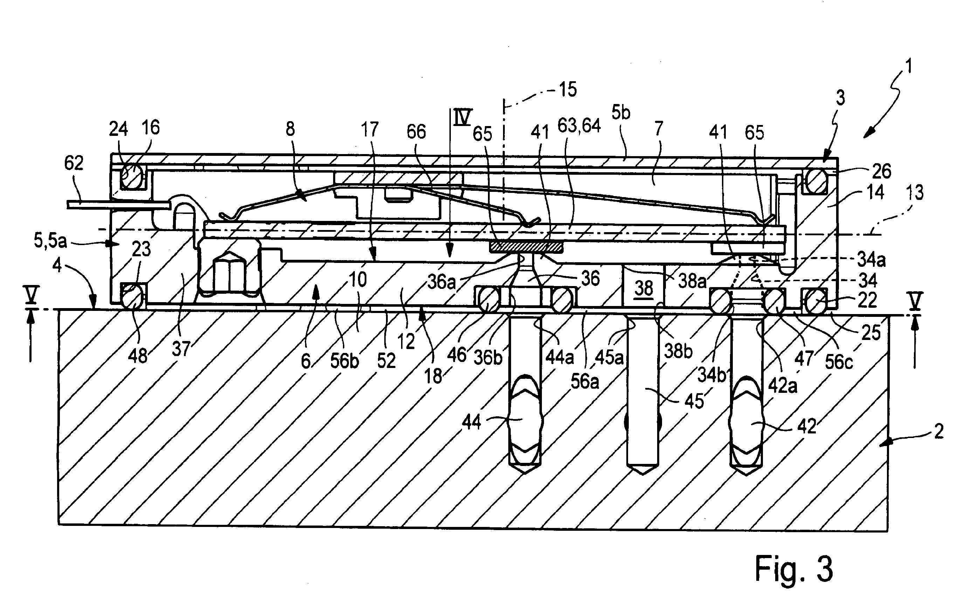

Die in ihrer Gesamtheit mit Bezugsziffer 1 bezeichnete Ventilanordnung enthält beim Ausführungsbeispiel einen Ventilträger 2 und ein auf einer Bestückungsfläche 4 des Ventilträgers 2 montierbares und in der aus Figuren 1 und 3 ersichtlichen Gebrauchsstellung auch tatsächlich montiertes Ventil 3. Das Ventil 3 hat ein allgemein mit Bezugsziffer 5 bezeichnetes Ventilgehäuse, das über eine vorzugsweise aus einem Kunststoffmaterial bestehende Gehäusewandung 6 verfügt, die einen eine Ventilkammer 7 bildenden Hohlraum umschließt.

In der Ventilkammer 7 befindet sich eine Fluidsteuereinrichtung 8, die bevorzugt elektrisch betätigbar ausgebildet ist und die beim Ausführungsbeispiel von piezoelektrischer Bauart ist. Mittels der Fluidsteuereinrichtung 8 lässt sich die Fluidströmung eines fluidischen Druckmediums durch verschiedene Fluidkanäle hindurch steuern, wobei es sich bei dem fluidischen Druckmedium insbesondere um Druckluft handelt.

Die Gehäusewandung 6 ist bevorzugt kastenartig strukturiert. Sie enthält einen beim Ausführungsbeispiel einen Boden definierenden Wandabschnitt, der aufgrund seines noch zu erläuternden Aufbaus als Ventilsitzwand 12 bezeichnet sei, wobei diese Ventilsitzwand 12 bevorzugt einen rechteckigen Umriss aufweist. Das Ventilgehäuse 5 hat vorzugsweise eine Längsgestalt mit Längsachse 13, wobei die längeren Rechteckseiten der Ventilsitzwand 12 parallel zu der Längsachse 13 ausgerichtet sind.

Am Rand der Ventilsitzwand 12 schließt sich ein weiterer Wandabschnitt der Gehäusewand 6 an, der im Folgenden als Umfangswand 14 bezeichnet sei und der rahmenförmig strukturiert ist, wobei er von der Ventilsitzwand 12 in Achsrichtung einer zu der Längsachse 13 rechtwinkeligen Hochachse 15 des Ventilgehäuses 5 wegragt.

Die Ventilsitzwand 12 und die Umfangswand 14 sind zweckmäßigerweise einstückig miteinander ausgebildet und bilden gemeinsam ein beispielsweise trog- oder napfförmiges Gehäuseunterteil 5a des Ventilgehäuses 5.

An der der Ventilsitzwand 12 in Achsrichtung der Hochachse 15 gegenüberliegenden Seite, die beim Ausführungsbeispiel in der dort gezeigten Ausrichtung eine Oberseite darstellt, ist die Ventilkammer 7 durch einen Gehäusedeckel 5b verschlossen, der unter Zwischenfügung einer dem Umfangsverlauf der Umfangswand 14 folgenden, rahmenförmigen Deckeldichtung 16 fluiddicht an die Umfangswand 14 angesetzt ist.

Die Ventilsitzwand 12 hat eine der Ventilkammer 7 zugewandte Innenseite 17 und eine diesbezüglich entgegengesetzte, in der am Ventilträger 2 montierten Gebrauchsstellung dem Ventilträger 2 zugewandte Außenseite 18.

In der Gebrauchsstellung des Ventils 3 ist zwischen dem Ventil 3 und dem Ventilträger 2 eine Dichtung angeordnet, die wie die Deckeldichtung 16 aus einem Material mit gummielastischen Eigenschaften besteht und die aufgrund ihrer noch zu beschreibenden Hauptfunktion als Kammerdichtung 22 bezeichnet sei. Die Kammerdichtung 22 liegt in der montierten Gebrauchsstellung des Ventils 3 einerseits an der Bestückungsfläche 4 des Ventilträgers 2 und andererseits an der Außenseite 18 der Ventilsitzwand 12 an. Seitens der Ventilsitzwand 12 ist sie dabei zweckmäßigerweise über einen Teil ihrer Höhe in einer in der Ventilsitzwand 12 ausgebildeten Dichtungs-Aufnahmenut angeordnet, die im Folgenden zur besseren Unterscheidung als erste Dichtungs-Aufnahmenut 23 bezeichnet sei.

In der dem Gehäusedeckel 5b zugewandten Randfläche der Umfangswand 14 ist zweckmäßigerweise eine zweite Dichtungs-Aufnahmenut 24 ausgebildet, in der die Deckeldichtung 16 mit einem Teil ihrer Höhe einsitzt.

Während die Kammerdichtung 22 an der Außenseite 18 ein Stückweit über die Ventilsitzwand 12 vorsteht, ragt die Deckeldichtung 16 ein Stückweit nach oben über die Umfangswand 14 hinaus.

Somit ergibt sich bei montiertem Ventil 3 ein von der Kammerdichtung 22 überbrückter erster Luftspalt 25 zwischen der Ventilsitzwand 12 und dem Ventilträger 2 und außerdem ein von der Deckeldichtung 16 überbrückter zweiter Luftspalt 26 zwischen der Umfangswand 14 und dem Gehäusedeckel 5b.

Beim Ventil 3 des Ausführungsbeispiels ist der Gehäusedeckel 5b in vorteilhafter Weise ein unmittelbarer Bestandteil eines insgesamt mit Bezugsziffer 27 bezeichneten Niederhalters, durch den das Ventil 3 in seiner Gebrauchsstellung an dem Ventilträger 2 befestigt ist.

Der Niederhalter 27 hat exemplarisch einen U-förmigen Querschnitt, wobei der Querschnitt rechtwinkelig zu der Längsachse 13 betrachtet wird. Hierbei schließt sich an die beiden Längsränder eines den Gehäusedeckel 5b bildenden plattenförmigen Abschnittes des Niederhalters 27 einer von zwei nach unten ragenden Halteschenkeln 27a, 27b an, wobei der Niederhalter 27 mit seiner U-Öffnung voraus so auf das Gehäuseunterteil 5a aufgesetzt ist, dass er mit dem den Gehäusedeckel 5b bildenden Abschnitt die Ventilkammer 7 überdeckt. Die beiden Halteschenkel 27a, 27b greifen längsseits an dem Gehäuseunterteil 5a vorbei nach unten, wobei von jedem Halteschenkel 27a, 27b an seinem dem Gehäusedeckel 5b entgegengesetzten freien Ende eine oder mehrere gelochte Befestigungslaschen 28 nach außen wegragen. In dem Ventilträger 2 sind mehrere zu der Bestückungsfläche 4 ausmündende Befestigungslöcher 32 ausgebildet, die jeweils ein Innengewinde aufweisen und die im angesetzten Zustand des Niederhalters 27 mit je einem Loch einer Befestigungslasche 28 fluchten. Mittels Befestigungsschrauben 33, die durch wenigstens eine Befestigungslasche 28 auf beiden Seiten des Ventils 3 hindurchgeführt und in ein Befestigungsloch 32 eingeschraubt sind, ist der Niederhalter 27 mit dem Ventilträger 2 so verspannbar, dass er sich - beim Ausführungsbeispiel mit den Befestigungslaschen 28 - fest an dem Ventilträger 2 abstützt.

Die in Achsrichtung der Hochachse 15 gemessene Höhe des Niederhalters 27 ist so auf die Höhe des Gehäuseunterteils 5a abgestimmt, dass im fest mit dem Ventilträger 2 verspannten Zustand des Niederhalters 27 der lichte Abstand zwischen dem Gehäusedeckel 5b und der Bestückungsfläche 4 größer ist als die Höhe des Gehäuseunterteils 5a. Die Höhendifferenz wird durch die Deckeldichtung 16 und die Kammerdichtung 22 überbrückt. Selbige sind durch den Niederhalter 27 zwischen den sie flankierenden Komponenten verspannt, so dass sie ihrer Abdichtfunktion nachkommen können. Gleichzeitig bewirken sie aber auch eine vorteilhafte schwimmende Lagerung der Ventilsitzwand 12 bezüglich des Ventilträgers 2. Die Ventilsitzwand 12 beziehungsweise das die Ventilsitzwand 12 enthaltende Gehäuseunterteil 5a ist hierbei nicht auf Block mit dem Ventilträger 2 verschraubt, sondern kann zwischen dem Gehäusedeckel 5b und dem Ventilträger 2 aufgrund der Nachgiebigkeit der Deckeldichtung 16 und der Kammerdichtung 12 verkippen beziehungsweise "schwimmen". Mithin kann die Ventilsitzwand 12 beim Befestigen des Ventils 3 nicht verbogen werden, was sich vorteilhaft auf die Funktionspräzision des Ventils 3 auswirkt. Man kann somit sagen, dass sowohl die Kammerdichtung 22 als auch die Deckeldichtung 16 jeweils ein gummielastisches Ausgleichselement zur flexiblen und stets nachgiebigen Fixierung der Ventilsitzwand 12 bilden.

Die Ventilsitzwand 12 ist von mindestens einem und exemplarisch von zwei Speisekanälen 34 durchsetzt. Jeder Speisekanal 34 mündet mit einer inneren Kanalmündung 34a in die Ventilkammer 7 und mit einer äußeren Kanalmündung 34b zur Außenseite 18 aus. Zur Gewährleistung der gewünschten Funktion würde prinzipiell ein einziger Speisekanal 34 ausreichen. Wenn daher im Folgenden von den Speisekanälen 34 die Rede ist, soll damit auch eine Ausführungsform mit nur einem Speisekanal gemeint sein.

Die inneren Kanalmündungen 34a der Speisekanäle 34 sind einem ersten schmalseitigen Endbereich 35 der Ventilsitzwand 12 zugeordnet.

Mit Abstand in Achsrichtung der Längsachse 13 zu den Speisekanälen 34 ist die Ventilsitzwand 12 von mindestens einem und beim Ausführungsbeispiel von genau einem Entlastungskanal 36 durchsetzt. Er mündet mit einer inneren Kanalmündung 36a in die Ventilkammer 7 aus und mit einer äußeren Kanalmündung 36b zur Außenseite 18. Exemplarisch liegt der Entlastungskanal 36 in etwa in einem mittleren Bereich zwischen dem ersten schmalseitigen Endbereich 35 und einem hierzu entgegengesetzten zweiten schmalseitigen Endbereich 37 der Ventilsitzwand 12.

Die Ventilsitzwand 12 ist des Weiteren von einem Arbeitskanal 38 durchsetzt, der mit einer inneren Kanalmündung 38a zur Ventilkammer 7 ausmündet und mit einer äußeren Kanalmündung 38b zur Außenseite 18 der Ventilsitzwand 12. Vorzugsweise, jedoch nicht zwingend, liegt der Arbeitskanal 38 bezogen auf die Längsachse 13 zwischen einerseits den Speisekanälen 34 und andererseits dem Entlastungskanal 36.

Jeder Speisekanal 34 und jeder Entlastungskanal 36 ist im Bereich seiner inneren Kanalmündung 34a, 34b, 36a von einem bevorzugt erhaben ausgebildeten und zweckmäßigerweise in die Ventilkammer 7 hinein vorstehenden Ventilsitz 41 umrahmt. Diese Ventilsitze 41 sind die Namensgeber für die Ventilsitzwand 12.

Der Ventilträger 2 ist von einem Einlasskanal 42 durchsetzt, der mit einer ersten Kanalmündung 42a zur Bestückungsfläche 4 ausmündet, wobei diese erste Kanalmündung 42a in der montierten Gebrauchsstellung des Ventils 3 der äußeren Kanalmündung 34b des Speisekanals 34 gegenüberliegt. Mit einer entgegengesetzten zweiten Kanalmündung öffnet sich der Einlasskanal 42 zu einer von der Bestückungsfläche 4 abweichenden Außenfläche des Ventilträgers 2, wo er mit einer Anschlusseinrichtung 43a versehen ist.

Der Ventilträger 2 ist des Weiteren von einem Auslasskanal 44 durchsetzt, der mit einer ersten Kanalmündung 44a zu der Bestückungsfläche 4 ausmündet, wobei diese erste Kanalmündung 44a der äußeren Kanalmündung 36b des Entlastungskanals 36 gegenüberliegt. Der Auslasskanal 44 mündet außerdem mit einer zweiten Kanalmündung zu einer Außenfläche des Ventilträgers 2 aus, wo er mit einer Anschlusseinrichtung 43b versehen ist.

Schließlich ist der Ventilträger 2 auch noch von einem Ausgangskanal 45 durchsetzt, der mit einer ersten Kanalmündung 45a so zu der Bestückungsfläche 4 ausmündet, dass er mit dem Arbeitskanal 38 kommuniziert. Mit einer zweiten Kanalmündung öffnet sich der Ausgangskanal 45 zu einer Außenfläche des Ventilträgers 2, wo er mit einer Anschlusseinrichtung 43c versehen ist.

Jede Anschlusseinrichtung 43a, 43b, 43c ist geeignet, um eine Fluidleitung, beispielsweise einen Fluidschlauch, lösbar anschließen zu können. Auf diese Weise kann der Einlasskanal 42 mit einer Druckquelle und der Ausgangskanal 45 mit einem zu betätigenden Verbraucher verbunden werden. Außerdem kann der Auslasskanal 44 mit einer Drucksenke, insbesondere mit der Atmosphäre verbunden werden, wobei allerdings auch eine direkte Verbindung mit der Atmosphäre möglich ist, ohne eine Fluidleitung zu verwenden. In die zugeordnete Anschlusseinrichtung 43b kann hierzu beispielsweise ein Schalldämpfer eingesetzt werden. Alternativ kann die Anschlusseinrichtung 43b auch ersatzlos entfallen.

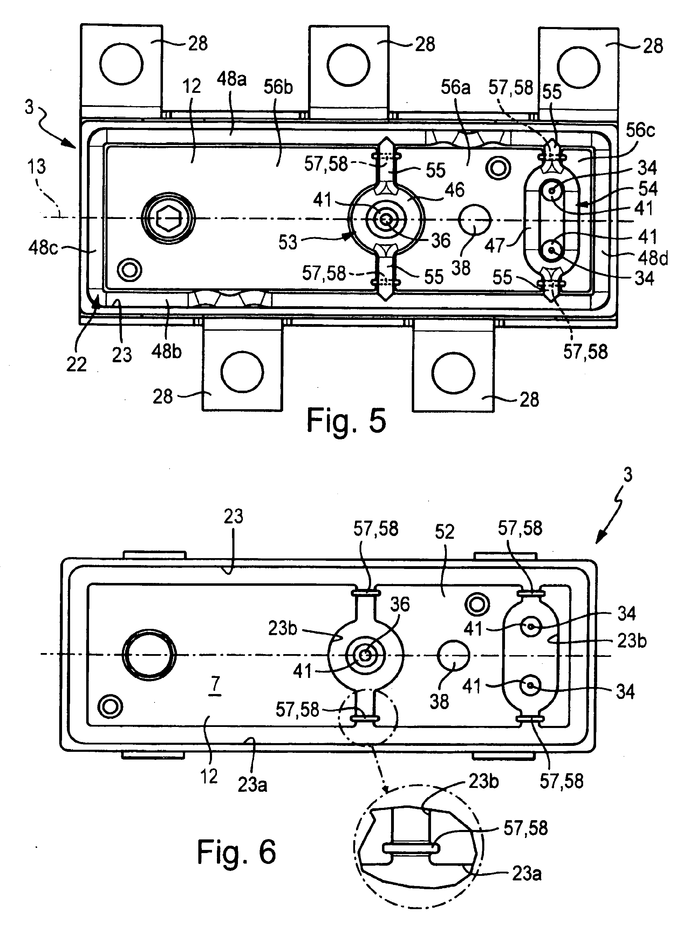

Zwischen der Ventilsitzwand 12 und dem Ventilträger 2 befinden sich zwei Mündungsdichtungen 46, 47, wobei eine erste Mündungsdichtung 46 die äußere Kanalmündung 36b und die erste Kanalmündung 44a umrahmt, während eine zweite Mündungsdichtung 47 gemeinsam die äußeren Kanalmündungen 34b und die diesen beiden äußeren Kanalmündungen 34b gemeinsam zugeordnete erste Kanalmündung 42a umrahmt. Während die erste Mündungsdichtung 46 hierzu kreisringförmig ausgebildet sein kann, hat die zweite Mündungsdichtung 47 zweckmäßigerweise eine längliche, schmalseitig abgerundete Gestalt, was insbesondere aus Figur 5 ersichtlich ist.

Jede Mündungsdichtung 46, 47 liegt unter Abdichtung einerseits an der Außenseite 18 der Ventilsitzwand 12 und andererseits an der Bestückungsfläche 4 an. Auf diese Weise ist der Kanalübergang zwischen einerseits dem Speisekanal 34 und dem Einlasskanal 42 und andererseits dem Entlastungskanal 36 und dem Auslasskanal 44 zur Umgebung hin abgedichtet. Es ist ein leckagefreier Fluidübertritt möglich.

Ein leckagefreier Fluidübertritt zwischen dem Arbeitskanal 38 und dem Ausgangskanal 45 ist durch einen rahmenartig ausgebildeten und deshalb als Rahmenabschnitt 48 bezeichneten Abschnitt der Kammerdichtung 22 gewährleistet, der sowohl die äußere Kanalmündung 38b des Arbeitskanals 38 als auch die erste Kanalmündung 45a des Ausgangskanals 45 umrahmt. Der Rahmenabschnitt 48 ist ferner derart zwischen dem Ventilgehäuse 5 und dem Ventilträger 2 angeordnet, dass er auch die beiden Mündungsdichtungen 46, 47 umrahmt. Durch den Rahmenabschnitt 48 wird der Außenumfang eines in der Höhenrichtung 15 zwischen der Ventilsitzwand 12 und dem Ventilträger 2 ausgebildeten Zwischenraumes begrenzt, wobei dieser Zwischenraum aufgrund seiner Funktion als Kompensationskammer 52 bezeichnet sei. Der Arbeitskanal 38 und der Ausgangskanal 45 stehen über die Kompensationskammer 52 hinweg in ständiger Fluidverbindung miteinander, wobei sie aufgrund der Mündungsdichtungen 46, 47 fluiddicht vom Speisekanal 34, Entlastungskanal 36, Einlasskanal 42 und Auslasskanal 44 abgeschirmt sind.

Die Mündungsdichtungen 46, 47 können prinzipiell als bezüglich der Kammerdichtung 22 separate Komponenten ausgebildet sein. Ihre Herstellung und Montage wird jedoch begünstigt, wenn sie wie beim Ausführungsbeispiel jeweils einen unmittelbaren und vorzugsweise einstückigen Bestandteil der Kammerdichtung 22 darstellen. Dementsprechend enthält die Kammerdichtung 22 beim Ausführungsbeispiel außer dem Rahmenabschnitt 48 auch noch zwei Abschnitte, die die beiden rahmenartigen Mündungsdichtungen 46, 47 bilden.

Exemplarisch sind die Mündungsdichtungen 46, 47 dadurch in die Kammerdichtung 22 integriert, dass sie jeweils Bestandteil eines von zwei Stegabschnitten der Kammerdichtung 22 sind, die im Folgenden als erster und zweiter Stegabschnitt 53, 54 bezeichnet seien.

Der Rahmenabschnitt 48 der Kammerdichtung 22 hat eine Längsgestalt mit zwei zueinander beabstandeten und sich in Achsrichtung der Längsachse 13 erstreckenden längsseitigen Rahmenschenkeln 48a, 48b sowie zwei rechtwinkelig dazu verlaufenden und jeweils die beiden längsseitigen Rahmenschenkel 48a, 48b endseitig verbindenden schmalseitigen Rahmenschenkeln 48c, 48d. Die beiden Stegabschnitte 43, 44 sind zwischen den beiden schmalseitigen Rahmenschenkeln 48c, 48d angeordnet und erstrecken sich jeweils bevorzugt rechtwinkelig zur Längsachse 13 zwischen den beiden längsseitigen Rahmenschenkeln 48a, 48b, mit denen sie jeweils einstückig verbunden sind. Jeder Stegabschnitt 53, 54 enthält eine der beiden Mündungsdichtungen 46, 47 sowie zwei Verbindungsstege 55, die die zugeordnete Mündungsdichtung 46, 47 mit jeweils einem der beiden längsseitigen Rahmenschenkel 48a, 48b verbinden.

Aufgrund der geschilderten Anordnung wird die Kompensationskammer 52 durch jeden Stegabschnitt 53, 54 in zwei zueinander benachbarte Kammerabschnitte unterteilt, woraus exemplarisch ein zwischen den beiden Stegabschnitten 53, 54 liegender mittlerer Kammerabschnitt 56a resultiert und außerdem zwei äußere Kammerabschnitte 56b, 56c, die jeweils zwischen einem der beiden Stegabschnitte 53, 54 und einem der beiden schmalseitigen Rahmenschenkel 48c, 48d liegen.

Der Arbeitskanal 38 mündet wie der Ausgangskanal 45 in den mittleren Kammerabschnitt 56a ein.

Wenn das Ventil 3 in der Gebrauchsstellung montiert ist, ist die Kompensationskammer 52 in der Achsrichtung der Hochachse 15 einerseits von der Außenseite 18 der Ventilsitzwand 12 begrenzt und andererseits, diesbezüglich gegenüberliegend, von dem Ventilträger 2, der insofern eine der Ventilsitzwand in der Höhenrichtung 15 mit Abstand gegenüberliegende Begrenzungswand 10 bildet. Die Bestückungsfläche 4 ist an der Begrenzungswand 10 ausgebildet. Da die Kammerdichtung 22 sowohl an der Außenseite 18 der Ventilsitzwand 12 als auch an der Begrenzungswand 10 dichtend anliegt, und zwar sowohl mit dem Rahmenabschnitt 48 als auch mit den beiden Stegabschnitten 53, 54, sind alle Kammerabschnitte 56a, 56b, 56c der Kompensationskammer 52 von der Umgebung fluiddicht abgetrennt.

Gleichwohl sind Maßnahmen getroffen, die eine ständige Fluidverbindung zwischen den einzelnen Kammerabschnitten 56a, 56b, 56c gewährleisten. Genauer gesagt ist der mittlere Kammerabschnitt 56a ständig mit sowohl dem einen als auch dem anderen äußeren Kammerabschnitt 56b, 56c fluidisch verbunden. Auf diese Weise herrscht in allen Kammerabschnitten 56a, 56b, 56c und mithin in der gesamten Kompensationskammer 52 stets zumindest im Wesentlichen der gleiche Fluiddruck.

Dadurch, dass der mittlere Kammerabschnitt 56a durch den Arbeitskanal 38 hindurch ständig mit der Ventilkammer 7 fluidisch verbunden ist, herrscht unabhängig vom Betriebszustand der Fluidsteuereinrichtung 8 in der Kompensationskammer 52 beziehungsweise in deren verschiedenen Kammerabschnitten 56a, 56b, 56c der gleiche Fluiddruck wie in der Ventilkammer 7.

Dies hat den Effekt, dass die die Ventilsitze 41 aufweisende Ventilsitzwand 12 unabhängig vom Betriebszustand der Fluidsteuereinrichtung 8 an ihrer Außenseite 18 dem gleichen Fluiddruck ausgesetzt ist wie an ihrer Innenseite 17. Als Folge hiervon ist die Ventilsitzwand 12 belastungsmäßig druckausgeglichen, so dass sie sich im Betrieb des Ventils 3 nicht verbiegt und die Ventilsitze 41 eine konstante Lage einnehmen, so dass sich ungeachtet des schwankenden Innendruckes in der Ventilkammer 7 keine Veränderungen in den Betriebspunkten des Ventils 3 einstellen.

Dieser Druckausgleichseffekt ist beim Ausführungsbeispiel optimal dadurch gewährleistet, dass der insbesondere von dem Rahmenabschnitt 48 definierte Umriss der Kompensationskammer 52 im Bereich der Außenseite 18 zumindest im Wesentlichen dem im Bereich der Innenseite 17 von der Umfangswand 14 definierten Umriss der Ventilkammer 7 entspricht. Aufgrund konstruktiver Zwänge wird es zwar meist nicht möglich sein, die außen und innen an der Ventilsitzwand 12 dem Fluiddruck ausgesetzten Flächen exakt gleichgroß auszubilden. Auch wenn jedoch die Druckbeaufschlagungsfläche an der Außenseite 18 von derjenigen an der Innenseite 17 etwas abweicht, ergibt sich bereits ein sich auf das Betriebsverhalten des Ventils 3 positiv auswirkender Effekt.

Die ständige Fluidverbindung zwischen den einzelnen Kammerabschnitten 56a, 56b, 56c wird insbesondere dadurch gewährleistet, dass jedem Stegabschnitt 53, 54 mindestens ein Bypasskanal 57 zugeordnet ist, durch den der Stegabschnitt 53, 54 bei montierter Kammerdichtung 22 fluidisch überbrückt wird.

Zweckmäßigerweise ist jedem Verbindungssteg 55 ein eigener Bypasskanal 57 zugeordnet, der den Verbindungssteg 55 überbrückt. Eine besonders zweckmäßige Realisierungsform sieht vor, dass jeder Bypasskanal 57 in Form einer im Folgenden als Überströmnut 58 bezeichneten Nut realisiert ist, die an der Außenseite 18 in die Ventilsitzwand 12 eingebracht ist. Die Überströmnut 58 ist derart platziert und ausgestaltet, dass sie bei montierter Kammerdichtung 22 den zugeordneten Verbindungssteg 55 unterquert, so dass sich der Verbindungssteg 55 über sie hinweg erstreckt, wobei sie eine derartige Länge hat, dass sie einenends zu dem mittleren Kammerabschnitt 56a und andernends zum benachbarten äußeren Kammerabschnitt 56b oder 56c offen ist. Mit anderen Worten wird hier quasi eine lokale Undichtigkeit der Stegabschnitte 53, 54 hervorgerufen, die einen Druckausgleich innerhalb der vorhandenen Kammerabschnitte 56a, 56b, 56c ermöglicht.

Die Kontur der ersten Dichtungs-Aufnahmenut 23 ist zweckmäßigerweise an die Kontur der Kammerdichtung 22 angepasst. Auf diese Weise hat die erste Dichtungs-Aufnahmenut 23 einen den Rahmenabschnitt 48 aufnehmenden rahmenförmigen Nutabschnitt 23a und zwei die beiden Stegabschnitte 53, 54 aufnehmende stegförmige Nutabschnitte 23b. Die Überströmnuten 58 sind als Einschnitte in die stegförmigen Nutabschnitte 23b ausgebildet, was in Figur 6 gut ersichtlich ist, wobei ihre Nutlänge größer ist als die Nutbreite des zugeordneten Stegabschnittes 53, 54 im Bereich der Überströmnut 58.

Die Fluidsteuereinrichtung 8 ist insbesondere elektrisch betätigbar. Sie verfügt über außerhalb des Ventilgehäuses 5 zugängliche elektrische Schnittstellenmittel 62, an denen elektrische Betätigungssignale, die von einer externen elektronischen Steuereinrichtung stammen, einspeisbar sind.

Die Fluidsteuereinrichtung 8 enthält Ventilgliedmittel 63, die aus einem oder mehreren Ventilgliedern bestehen und die beim Ausführungsbeispiel in vorteilhafter Weise in Form eines piezoelektrischen Biegewandlers 64 ausgeführt sind. Die Ventilgliedmittel 63 sind im Innern der Ventilkammer 7 am Ventilgehäuse 5 abgestützt und enthalten eine der Anzahl der Ventilsitze 41 entsprechende Anzahl von Verschlussabschnitten 65, die jeweils einem Ventilsitz 41 gegenüberliegen.

Exemplarisch bestehen die Verschlussabschnitte 65 aus gummielastischen Plättchen, die an dem Biegewandler 64 angeordnet sind.

Durch Federmittel 66 der Fluidsteuereinrichtung 8 sind die Ventilgliedmittel 63 beim Ausführungsbeispiel ständig derart beaufschlagt, dass jeder Verschlussabschnitt 65 im elektrisch deaktivierten Zustand der Fluidsteuereinrichtung 8 eine Absperrstellung einnimmt, an der er dichtend am zugeordneten Ventilsitz 41 anliegt, so dass die Ventilkammer 7 sowohl vom Entlastungskanal 36 als auch von dem mindestens einen Speisekanal 34 fluiddicht abgetrennt ist.

Nach dem Vorbild des in der EP 1 564 464 B1 beschriebenen Piezoventils kann durch entsprechende elektrische Ansteuerung der Fluidsteuereinrichtung 8 deren Betriebszustand so geändert werden, dass entweder der Entlastungskanal 36 oder der mindestens eine Speisekanal 34 weiterhin abgesperrt bleibt, der jeweils andere Kanal 34, 36 jedoch freigegeben wird, indem der zugeordnete Verschlussabschnitt 65 vom betreffenden Ventilsitz 41 abgehoben wird. Der Biegewandler 64 wird dabei entweder nach oben oder nach unten ausgewölbt. Auf diese Weise kann der Arbeitskanal 38 durch die Ventilkammer 7 hindurch mit wahlweise dem Entlastungskanal 36 oder dem mindestens einen Speisekanal 34 verbunden und gleichzeitig vom jeweils anderen Kanal abgetrennt werden.

Diese Funktionalität der Fluidsteuereinrichtung 8 bietet die Möglichkeit, einen an den Arbeitskanal 38 angeschlossenen Verbraucher wahlweise mit Druckmedium zu versorgen, vom Druckmedium zu entlasten oder unter einer konstanten Druckbeaufschlagung zu halten.

In allen Fällen ist die Ventilsitzwand 12 druckausgeglichen, weil der in der Ventilkammer 7 herrschende Fluiddruck durch den Arbeitskanal 38 hindurch auch in der Kompensationskammer 52 auf der der Ventilkammer 7 entgegengesetzten Außenseite 18 der Ventilsitzwand 12 ansteht. Dementsprechend sind Lageveränderungen zwischen den Ventilsitzen 41 und den Verschlussabschnitten 65, die nicht durch die gewollte Änderung eines Betriebszustandes der Fluidsteuereinrichtung 8 hervorgerufen werden, ausgeschlossen oder zumindest erheblich reduziert. Dementsprechend behält das Ventil 3 seine Betriebspunkte im Wesentlichen konstant bei, was eine hohe Funktionspräzision insbesondere auch in solchen Fällen gewährleistet, in denen die Verschlussabschnitte 65 einen nur geringen Hub ausführen können, was vor allem für piezoelektrische Fluidsteuereinrichtungen typisch ist.

## Patentansprüche

1. Ventilanordnung, mit einem Ventil (3), das über eine eine Ventilkammer (7) umschließende Gehäusewandung (6) verfügt, die eine Ventilsitzwand (12) mit an ihrer der Ventilkammer (7) zugewandten Innenseite (17) angeordneten Ventilsitzen (41) mindestens eines Speisekanals (34) und mindestens eines Entlastungskanals (36) aufweist, wobei in der Ventilkammer (7) eine Fluidsteuereinrichtung (8) angeordnet ist, die durch Zusammenwirken mit den Ventilsitzen (41) in der Lage ist, den mindestens einen Speisekanal (34) und den mindestens einen Entlastungskanal (36) wahlweise abzusperren oder freizugeben, und wobei sich in der Gehäusewandung (6) ein in die Ventilkammer (7) einmündender und ständig mit der Ventilkammer (7) in Fluidverbindung stehender Arbeitskanal (38) erstreckt, **dadurch gekennzeichnet, dass** die Ventilsitzwand (12) mit ihrer Außenseite (18) eine durch den Arbeitskanal (38) hindurch ständig mit der Ventilkammer (7) in Fluidverbindung stehende Kompensationskammer (52) begrenzt, so dass die Ventilsitzwand (12) unabhängig vom Betriebszustand der Fluidsteuereinrichtung (8) an ihrer Außenseite (18) dem gleichen Fluiddruck ausgesetzt ist wie an ihrer Innenseite (17).

2. Ventilanordnung nach Anspruch 1, **dadurch gekennzeichnet, dass** der Arbeitskanal (38) die Ventilsitzwand (12) durchsetzt und an der der Innenseite (17) entgegengesetzten Außenseite (18) der Ventilsitzwand (12) in die Kompensationskammer (52) ausmündet.

3. Ventilanordnung nach Anspruch 1 oder 2, **dadurch gekennzeichnet, dass** der Umriss der Kompensationskammer (52) im Bereich der Außenseite (18) der Ventilsitzwand (12) zumindest im Wesentlichen dem Umriss der Ventilkammer (7) im Bereich der Innenseite (17) der Ventilsitzwand (12) entspricht.

4. Ventilanordnung nach einem der Ansprüche 1 bis 3, **dadurch gekennzeichnet, dass** mindestens ein Speisekanal (34) und/oder mindestens ein Entlastungskanal (36) an der der Ventilkammer (7) abgewandten Außenseite (18) der Ventilsitzwand (12) derart ausmündet, dass seine Kanalmündung (34b, 36b) von der Kompensationskammer (52) fluiddicht abgetrennt oder abtrennbar ist.

5. Ventilanordnung nach einem der Ansprüche 1 bis 4, **dadurch gekennzeichnet, dass** die Kompensationskammer (52) umfangsseitig von einer unter Abdichtung an der Außenseite (18) der Ventilsitzwand (12) anliegenden oder anlegbaren Kammerdichtung (22) umrahmt und fluiddicht begrenzt ist.

6. Ventilanordnung nach Anspruch 5 in Verbindung mit Anspruch 4, **dadurch gekennzeichnet, dass** jede der Ventilkammer (7) entgegengesetzte Kanalmündung (34b, 36b) des mindestens einen Speisekanals (34) und/oder Entlastungskanals (36) von einer unter Abdichtung an der Außenseite (18) der Ventilsitzwand (12) anliegenden oder anlegbaren Mündungsdichtung (46, 47) umrahmt und dadurch fluiddicht von der Kompensationskammer (52) abgetrennt oder abtrennbar ist.

7. Ventilanordnung nach Anspruch 6 in Verbindung mit Anspruch 5, **dadurch gekennzeichnet, dass** die mindestens eine Mündungsdichtung (46, 47) ein unmittelbarer Bestandteil der Kammerdichtung (22) ist.

8. Ventilanordnung nach Anspruch 7, **dadurch gekennzeichnet, dass** die Kammerdichtung (22) einen die Kompensationskammer (52) umfangsseitig umrahmenden Rahmenabschnitt (48) und mindestens einen den Rahmenabschnitt (48) durchquerenden und mindestens eine Mündungsdichtung (46, 47) bildenden Stegabschnitt (53, 54) aufweist, wobei die Kompensationskammer (52) durch jeden Stegabschnitt (53, 54) in zwei Kammerabschnitte (56a, 56b; 56a, 56c) unterteilt ist, die durch mindestens einen den Stegabschnitt (53, 54) überbrückenden Bypasskanal (57) in ständiger Fluidverbindung miteinander stehen.

9. Ventilanordnung nach Anspruch 8, **dadurch gekennzeichnet, dass** mindestens ein Bypasskanal (57) von einer an der Außenseite (18) in der Ventilsitzwand (12) ausgebildeten Überströmnut (58) gebildet ist, die den zugeordneten Stegabschnitt (53, 54) der Kammerdichtung (22) unterquert.

10. Ventilanordnung nach einem der Ansprüche 1 bis 9, **dadurch gekennzeichnet, dass** die Kompensationskammer (52) in mehrere Kammerabschnitte (56a, 56b, 56c) unterteilt ist, wobei der Arbeitskanal (38) in einen dieser Kammerabschnitte (56a) einmündet, wobei dieser Kammerabschnitt (56a) mit den anderen Kammerabschnitten (56b, 56c) in ständiger Fluidverbindung steht.

11. Ventilanordnung nach einem der Ansprüche 1 bis 10, **dadurch gekennzeichnet, dass** die Kompensationskammer (52) an der der Außenseite (18) der Ventilsitzwand (12) gegenüberliegenden Seite von einer Begrenzungswand (10) der Ventilanordnung (1) begrenzt ist.

12. Ventilanordnung nach Anspruch 11 in Verbindung mit einem der Ansprüche 1 bis 10, **dadurch gekennzeichnet, dass** die Begrenzungswand (10) unter Abdichtung an der Kammerdichtung (22) und an einer eventuell vorhandenen Mündungsdichtung (46, 47) anliegt.

13. Ventilanordnung nach Anspruch 11 oder 12, **dadurch gekennzeichnet, dass** die Begrenzungswand (10) von einem bezüglich des Ventils (3) separaten Ventilträger (2) der Ventilanordnung (1) gebildet ist, an dem das Ventil (3) befestigt oder befestigbar ist.

14. Ventilanordnung nach einem der Ansprüche 11 bis 13, **dadurch gekennzeichnet, dass** in der Begrenzungswand (10) ein zu der Kompensationskammer (52) ausmündender Ausgangskanal (45) ausgebildet ist, der andererseits zweckmäßigerweise zu einer außen an der Begrenzungswand (10) angeordneten Anschlussöffnung führt.

15. Ventilanordnung nach Anspruch 14, **dadurch gekennzeichnet, dass** in der Begrenzungswand (10) mindestens ein mit dem mindestens einen Speisekanal (34) kommunizierender Einlasskanal (42) und/oder mindestens ein mit dem Entlastungskanal (36) kommunizierender Auslasskanal (44) ausgebildet ist.

16. Ventilanordnung nach einem der Ansprüche 1 bis 15, **dadurch gekennzeichnet, dass** die Ventilsitzwand (12) bezüglich eines sie tragenden Ventilträgers (2) der Ventilanordnung (1) schwimmend gelagert ist, indem zum einen zwischen ihr und dem Ventilträger (2) eine die Kompensationskammer (52) umrahmende, elastisch nachgiebige Kammerdichtung (22) angeordnet ist und zum anderen auf der dem Ventilträger (2) entgegengesetzten Seite zwischen ihr und einem mit dem Ventilträger (2) verspannbaren Niederhalter (27) ein gummielastisches Ausgleichselement angeordnet ist.

17. Ventilanordnung nach einem der Ansprüche 1 bis 16, **dadurch gekennzeichnet, dass** die Fluidsteuereinrichtung (8) piezoelektrischer Art ist.

## Claims

1. Valve arrangement comprising a valve (3) having a housing wall (6) enclosing a valve chamber (7), which housing wall (6) comprises a valve seat wall (12) with valve seats (41) of at least one supply passage (34) and at least one unloading passage (36), which valve seats (41) are located on the inside (17) of the valve seat wall (12) facing the valve chamber (7), wherein a fluid control device (8) capable, by acting together with the valve seats (41), of optionally blocking or opening the at least one supply passage (34) and the at least one unloading passage (36) is located in the valve chamber (7), and wherein an operating passage (38) terminating into the valve chamber (7) and continuously being in fluid connection with the valve chamber (7) extends in the housing wall (6), **characterised in that** the valve seat wall (12) bounds with its outside (18) a compensation chamber (52) continuously in fluid connection with the valve chamber (7) through the operating passage (38), so that the valve seat wall (12) is subjected to the same fluid pressure on its outside (18) and on its inside (17) irrespective of the operating state of the fluid control device (8).

2. Valve arrangement according to claim 1, **characterised in that** the operating passage (38) passes through the valve seat wall (12) and terminates into the compensation chamber (52) at the outside (18) of the valve seat wall (12) opposite to its inside (17).

3. Valve arrangement according to claim 1 or 2, **characterised in that** the contour of the compensation chamber (52) in the region of the outside (18) of the valve seat wall (12) at least substantially corresponds to the contour of the valve chamber (7) in the region of the inside (17) of the valve seat wall (12).

4. Valve arrangement according to any of claims 1 to 3, **characterised in that** at least one supply passage (34) and/or at least one unloading passage (36) terminate(s) on the outside (18) of the valve seat wall (12) remote from the valve chamber (7) in such a way that its passage orifice (34a, 36b) is or can be separated from the compensation chamber (52) in a fluid-tight manner.

5. Valve arrangement according to any of claims 1 to 4, **characterised in that** the circumference of the compensation chamber (52) is framed and bounded in a fluid-tight manner by a chamber seal (22) which bears or can bear against the outside (18) of the valve seat wall (12) while forming a seal.

6. Valve arrangement according to claim 5 in combination with claim 4, **characterised in that** each passage orifice (34a, 36b) of the least one supply passage (34) and/or the at least one unloading passage (36) which is located opposite the valve chamber (7) is framed by an orifice seal (46, 47) which bears or can bear against the outside (18) of the valve seat wall (12) while forming a seal and thereby is or can be separated from the compensation chamber (52) in a fluid-tight manner.

7. Valve arrangement according to claim 6 in combination with claim 5, **characterised in that** the at least one orifice seal (46, 47) is a direct component of the chamber seal (22).

8. Valve arrangement according to claim 7, **characterised in that** the chamber seal (22) comprises a frame section (48) which frames the circumference of the compensation chamber (52) and at least one web section (53, 54) which crosses the frame section (48) and forms at least one orifice seal (46, 47), whereby the compensation chamber (52) is divided into two chamber sections (56a, 56b; 56a, 56c) which are in continuous fluid connection with one another via at least one bypass passage (57) bridging the web section (53, 54).

9. Valve arrangement according to claim 8, **characterised in that** at least one bypass passage (57) is represented by an overflow groove (58) which is formed on the outside (18) of the valve seat wall (12) and which crosses below the associated web section (53, 54) of the chamber seal (22).

10. Valve arrangement according to any of claims 1 to 9, **characterised in that** the compensation chamber (52) is divided into several chamber sections (56a, 56b, 56c), wherein the operating passage (38) terminates into one of these chamber sections (56a), the chamber section (56a) being in continuous fluid connection with the other chamber sections (56b, 56c).

11. Valve arrangement according to any of claims 1 to 10, **characterised in that** the compensation chamber (52) is bounded by a boundary wall (10) of the valve arrangement (1) on the side opposite the outside (18) of the valve seat wall (12).

12. Valve arrangement according to claim 11 in combination with any of claims 1 to 10, **characterised in that** the boundary wall (10) bears against the chamber seal (22) and the orifice seal (46, 47), if provided, while forming a seal.

13. Valve arrangement according to claim 11 or 12, **characterised in that** the boundary wall (10) is represented by a valve support (2) of the valve arrangement (1), which is separate from the valve (3) and to which the valve (3) is or can be secured.

14. Valve arrangement according to any of claims 11 to 13, **characterised in that** an output passage (45) terminating towards the compensation chamber (52) is formed in the boundary wall (10), the other end of which output passage (45) expediently leads to a connecting port located on the outside of the boundary wall (10).

15. Valve arrangement according to claim 14, **characterised in that** at least one inlet passage (42) communicating with the at least one supply passage (34) and/or at least one outlet passage (44) communicating with the unloading passage (36) is/are formed in the boundary wall (10).

16. Valve arrangement according to any of claims 1 to 15, **characterised in that** the valve seat wall (12) is arranged to be floating relative to a valve support (2) of the valve arrangement (1) which supports it, by providing that, one the one hand, an elastically yielding chamber seal (22) framing the compensation chamber (52) is located between the valve seat wall (12) and the valve support (2) and that, on the other hand, a rubber-elastic compensation element is located on the side opposite the valve support (2) between the valve seat wall (12) and a hold-down device (27) which can be clamped to the valve support (2).

17. Valve arrangement according to any of claims 1 to 16, **characterised in that** the fluid control device (8) is of a piezoelectric design.

## Revendications

1. Agencement de soupape avec une soupape (3) qui dispose d'une paroi de boîtier (6) entourant une chambre de soupape (7) qui présente une paroi de siège de soupape (12) avec des sièges de soupape (41) agencés sur son côté intérieur (17) tourné vers la chambre de soupape (7) au moins d'un canal d'alimentation (34) et au moins d'un canal de décharge (36), un dispositif de commande fluidique (8) étant agencé dans la chambre de soupape (7), lequel est en mesure par coopération avec les sièges de soupape (41) de verrouiller ou libérer au choix l'au moins un canal d'alimentation (34) et l'au moins un canal de décharge (36), et un canal de travail (38) se trouvant en permanence en liaison fluidique avec la chambre de soupape (7) et débouchant dans la chambre de soupape (7) s'étendant dans la paroi de boîtier (6), **caractérisé en ce que** la paroi de siège de soupape (12) délimite avec son côté extérieur (18) une chambre de compensation (52) se trouvant en permanence en liaison fluidique par le canal de travail (38) avec la chambre de soupape (7) de sorte que la paroi de siège de soupape (12) soit exposée indépendamment de l'état de fonctionnement du dispositif de commande fluidique (8) sur son côté extérieur (18) à la même pression fluidique que sur son côté intérieur (17).

2. Agencement de soupape selon la revendication 1, **caractérisé en ce que** le canal de travail (38) traverse la paroi de siège de soupape (12) et débouche sur le côté extérieur (18) en regard du côté intérieur (17) de la paroi de siège de soupape (12) dans la chambre de compensation (52).

3. Agencement de soupape selon la revendication 1 ou 2, **caractérisé en ce que** le contour de la chambre de compensation (52) dans la zone du côté extérieur (18) de la paroi de siège de soupape (12) correspond au moins sensiblement au contour de la chambre de soupape (7) dans la zone du côté intérieur (17) de la paroi de siège de soupape (12).

4. Agencement de soupape selon l'une quelconque des revendications 1 à 3, **caractérisé en ce qu'**au moins un canal d'alimentation (34) et/ou au moins un canal de décharge (36) débouche sur le côté extérieur (18) éloigné de la chambre de soupape (7) de la paroi de siège de soupape (12) de telle manière que son embouchure de canal (34b, 36b) soit ou puisse être séparée de manière étanche au fluide de la chambre de compensation (52).

5. Agencement de soupape selon l'une quelconque des revendications 1 à 4, **caractérisé en ce que** la chambre de compensation (52) est encadrée et délimitée de manière étanche au fluide côté périphérique par une garniture de chambre (22) posée ou pouvant être posée de manière étanche sur le côté extérieur (18) de la paroi de siège de soupape (12).

6. Agencement de soupape selon la revendication 5 en liaison avec la revendication 4, **caractérisé en ce que** chaque embouchure de canal (34b, 36b) en regard de la chambre de soupape (7) de l'au moins un canal d'alimentation (34) et/ou canal de décharge (36) est encadrée par une garniture d'embouchure (46, 47) posée ou pouvant être posée d manière étanche sur le côté extérieur (18) de la paroi de siège de soupape (12) et est ou peut être séparée par là même de manière étanche au fluide de la chambre de compensation (52).

7. Agencement de soupape selon la revendication 6 en liaison avec la revendication 5, **caractérisé en ce que** l'au moins une garniture d'embouchure (46, 47) est un élément direct de la garniture de chambre (22).

8. Agencement de soupape selon la revendication 7, **caractérisé en ce que** la garniture de chambre (22) présente une section de cadre (48) entourant côté périphérie la chambre de compensation (52) et au moins une section de nervure (53, 54) formant au moins une garniture d'embouchure (46, 47) et traversant la section de cadre (48), la chambre de compensation (52) étant divisée par chaque section de nervure (53, 54) en deux sections de chambre (56a, 56b ; 56a, 56c) qui sont en liaison fluidique permanente par au moins un canal de dérivation (57) surmontant la section de nervure (53, 54).

9. Agencement de soupape selon la revendication 8, **caractérisé en ce qu'**au moins un canal de dérivation (57) est formé par une rainure de débordement (58) réalisée sur le côté extérieur (18) dans la paroi de siège de soupape (12) qui passe sous la section de nervure (53, 54) associée de la garniture de chambre (22).

10. Agencement de soupape selon l'une quelconque des revendications 1 à 9, **caractérisé en ce que** la chambre de compensation (52) est divisée en plusieurs sections de chambre (56a, 56b, 56c), le canal de travail (38) débouchant dans l'une de ces sections de chambre (56a), cette section de chambre (56a) étant en liaison fluidique permanente avec les autres sections de chambre (56b, 56c).

11. Agencement de soupape selon l'une quelconque des revendications 1 à 10, **caractérisé en ce que** la chambre de compensation (52) est délimitée sur le côté en regard du côté extérieur (18) de la paroi de siège de soupape (12) par une paroi de délimitation (10) de l'agencement de soupape (1).

12. Agencement de soupape selon la revendication 11 en liaison avec l'une quelconque des revendications 1 à 10, **caractérisé en ce que** la paroi de délimitation (10) est posée de manière étanche sur la garniture de chambre (22) et sur une garniture d'embouchure (46, 47) éventuellement présente.

13. Agencement de soupape selon la revendication 11 ou 12, **caractérisé en ce que** la paroi de délimitation (10) est formée par un support de soupape (2) séparé par rapport à la soupape (3) de l'agencement de soupape (1), sur lequel la soupape (3) est ou peut être fixée.

14. Agencement de soupape selon l'une quelconque des revendications 11 à 13, **caractérisé en ce qu'**un canal de sortie (45) débouchant vers la chambre de compensation (52) est réalisé dans la paroi de délimitation (10), lequel mène d'autre part de manière appropriée vers une ouverture de raccordement agencée à l'extérieur sur la paroi de délimitation (10).

15. Agencement de soupape selon la revendication 14, **caractérisé en ce qu'**au moins un canal d'entrée (42) communiquant avec l'au moins un canal d'alimentation (34) et/ou au moins un canal de sortie (44) communiquant avec le canal de décharge (36) est réalisé dans la paroi de délimitation (10).

16. Agencement de soupape selon l'une quelconque des revendications 1 à 15, **caractérisé en ce que** la paroi de siège de soupape (12) est logée de manière flottante par rapport à un support de soupape (2) la portant de l'agencement de soupape (1), **en ce que** d'une part une garniture de chambre (22) flexible et élastique, encadrant la chambre de compensation (52) est agencée entre elle et le support de soupape (2) et d'autre part un élément de compensation élastique et caoutchouteux est agencé sur le côté en regard du support de soupape (2) entre elle et un serre-flan (27) pouvant être serré avec le support de soupape (2).

17. Agencement de soupape selon l'une quelconque des revendications 1 à 16, **caractérisé en ce que** le dispositif de commande fluidique (8) est de type piézoélectrique.
